Europäisches Patentamt

European Patent Office

Office européen des brevets

(19)

(11) **EP 1 154 074 A1**

(12) **EUROPEAN PATENT APPLICATION**

(43) Date of publication:
**14.11.2001 Bulletin 2001/46**

(21) Application number: **00201693.9**

(22) Date of filing: **11.05.2000**

(51) Int Cl.[7]: **D21H 21/20**, C08B 15/00,
C08B 31/00
// D21H17:25, D21H17:28

(84) Designated Contracting States:
**AT BE CH CY DE DK ES FI FR GB GR IE IT LI LU
MC NL PT SE**
Designated Extension States:
**AL LT LV MK RO SI**

(71) Applicant: **SCA Hygiene Products Zeist B.V.
3700 AJ Zeist (NL)**

(72) Inventors:
• **Thornton, Jeffrey Wilson
1272 AC Huizen (NL)**

• **Van Brussel-Verraest, Dorine Lisa
2771 KS Boskoop (NL)**
• **Besemer, Arie
3958 CE Amerongen (NL)**
• **Sandberg, Sussan
439 35 Onsala (SE)**

(74) Representative: **Jorritsma, Ruurd et al
Nederlandsch Octrooibureau
Scheveningseweg 82
P.O. Box 29720
2502 LS Den Haag (NL)**

(54) **Aldehyde-containing polymers as wet strength additives**

(57)     The invention concerns the use of a water-soluble or water-dispersible polymer having a molecular weight of at least 800, containing at least 5 aldehyde groups per molecule and at least 1 carboxyl group per molecule, the ratio of aldehyde groups to carboxyl groups being higher than 0.75:1, as a wet strength additive. The invention also discloses novel cationic derivatives thereof

**Description**

The present invention relates to the use of multifunctional aldehyde-containing polymers as temporary wet strength agents for paper and tissue applications, as well as nonwovens.

Wet strength is an important characteristic of paper and tissue products, and in nonwoven products. Wet strength of such products can be increased by using wet strength additives. The most widely used wet strength additives for the paper industry are melamine-formaldehyde and urea-formaldehyde. There is a tendency, however, to move away from such oil-based chemicals, because they are not renewable and have a poor biodegradability. Carboxymethyl cellulose (CMC) is currently used in combination with PAE (polyaminoamide epichlorohydrin) as a wet strength agent (see Espy, TAPPI Journal, 78, 90 (1995)). However, CMC is also partly dependent on oil-based materials (monochloroacetic acid) and, moreover, is a rather expensive material.

Oxidised celluloses have the advantage of being accessible from renewable raw materials only and possibly of being less expensive than CMC, while they may have comparable properties to CMC. However, the oxidation of cellulose is hampered by the poor solubility of cellulose, making it insufficiently accessible to oxidising agents.

Aldehyde functions have been recognised as being useful in binding cellulose fibers, to improve wet strength of the fibers. Thus, dialdehyde starch (TAPPI, 57, 81 (1974); and TAPPI 45, 750 (1962)) and dialdehyde guar and the like (WO 97/36054) have been proposed as paper wet strength additives. US 3,087,852 and US 4,001,032 disclose cationic dialdehyde starch, obtained by reacting dialdehyde starch with betaine hydrazide, to be used as a paper strengthening additive.

US 5,935,383 discloses the use of anionic compounds, such as sulphato-ethyl-amino-halotriazines, for providing the cellulose surface with additional anionic sites suitable for retaining a high proportion of cationic wet strength additives such as PAE resin on the cellulose.

WO 99/23117 and WO 99/23240 describe the oxidation of cellulose and starch, respectively, with TEMPO and an oxidative enzyme (laccase) and oxygen at pH 4-9 resulting in products containing low levels of carbaldehyde and carboxyl groups.

US 3,553,193 describes the oxidation of starch with bromite or hypobromite, which results in varying levels of carbonyl (ketonic) and carboxyl groups depending on the oxidation conditions, with a carbonyl/carboxyl ratio of between 2:1 and 8:1. The oxidation products are stated to be suitable as paper strength additives. The oxidation of starch with sodium hypochlorite is believed first to yield keto groups. In a later stage of oxidation aldehyde groups may be formed. The mechanism postulated by Whistler (J. Am. Chem. Soc., 79, 6460 (1957), see also PhD thesis of Floor, Delft University of Technology, 1989) however states that a diketo group is formed, which decomposes with OH- and is oxidised. One has to assume that hypobromite reacts in an analogous way. A recent publication of Deary and Davies in Carbohydr. Research 309, 17-29 (1998) reviews the bromine oxidation and confirms that keto groups are the primary products from bromine oxidation. From their experiments with $\alpha$-cyclodextrins they conclude also that the keto product is formed. They present no evidence for the formation of aldehydes. Also, Torneport et al (Starch 42, 413-417 (1990)) and Salomonsson et al (Carbohydrate Res. 217 (1991)) state that oxidation of starch with bromine species ($Br_2$:CH = 1/40 to 1/1) at pH 7 results in keto groups and carboxylic acids. It is known that higher pH's lead to higher carboxylate contents.

It was found that multifunctional polymers, especially biopolymers, having both aldehyde functions and carboxylic acid and/or other anionic functions, the ratio between aldehyde functions and anionic functions (hereafter referred to as A/C ratio) being at least 0.75:1, preferably at least 2:1, up to about 15:1, preferably up to 10:1, are very useful as wet strength additives. These polymers are excellent substitutes for known wet strength agents such as carboxymethyl cellulose (CMC) and dialdehyde starch because of their better ecological acceptability (degradability) and their improved water-solubility and thus better accessibility to further reagents, and an improved functionality.

The polymers to be used can be of a synthetic type, such as a copolymer of acrylic acid and acrolein, a copolymer of maleic acid and maleic (mono)aldehyde, appropriately modified polyvinyl alcohol or appropriately (aldehyde-)substituted polyacrylic acid or the like, having the desired level of aldehyde groups and the desired A/C ratio.

It is preferred, however, that the polymer is a biopolymer. Suitable biopolymers include (modified) peptides and proteins, proteoglycans and in particular polysaccharide-types of polymer. Examples of polysaccharides include $\alpha$-1,4-glucans (the "starch family", including amylose, amylopectin and dextrins), $\alpha$-1,6-glucans (dextran) and mixed $\alpha$-glucans such as pullulan, $\beta$-1,4-glucans (cellulose), $\beta$-1,3-glucans such as scleroglucan and curdlan, xyloglucans, glucomannans and galactomannans (guar and locust bean gum), other gums including heterogeneous gums like xanthan, ghatti, carrageenans, alginates, pectin, (arabino)xylans (hemicellulose), $\beta$-2,1- and $\beta$-2,6-fructans (inulin and levan), etc..

The simultaneous presence of aldehyde and anionic, such as carboxyl ($-CO_2H$), sulpho ($-SO_3H$) and phosphono ($-PO_3H_2$) groups, can be achieved by various methods. These methods comprise:

(1) introduction of anionic groups by addition, followed by introduction of aldehyde functions, e.g. by oxidation;

here, the anionic groups such as carboxyl groups or other acid groups may be introduced e.g. by carboxyalkylation, sulphatation, sulphoalkylation, phosphatation, or the like, or they may be present in polymers which already have added acid groups by biosynthesis such as sulphate groups in carrageenans; the aldehyde functions can be introduced e.g. by oxidation of 1,2-dihydroxyethylene groups (such as those at the 2,3-position of 1,4-linked or 1,6-linked glucans) using periodate-type oxidising agents, or by partial oxidation of hydroxymethyl groups (such as those at the 6-position of 1,4-linked or 1,3-linked glucans) using nitric oxide (NOx) types of oxidising agents;

(2) introduction of carboxyl groups by oxidation of hydroxymethyl groups followed by introduction of aldehyde functions by oxidation as under (1); here, the carboxyl (anionic) groups are introduced by oxidation of the hydroxymethyl groups, such as those at the 6-position of 1,4-linked or 1,3-linked glucans, using NOx-type of oxidising agents, or they may be present in polymers already containing 6-carboxyl groups by biosynthesis, if necessary after hydrolysis of ester groups, such as pectins, xanthans and alginates; the aldehyde groups can again be introduced e.g. by oxidation of 1,2-dihydroxyethylene groups, or by partial oxidation of further hydroxymethyl groups;

(3) controlled oxidation of hydroxymethyl groups (such as those at the 6-position of 1,4-linked or 1,3-linked glucans) so as to partly convert them to aldehyde functions and to convert only a (minor) part of the aldehyde functions so obtained to carboxyl functions;

(4) introduction of aldehyde groups, e.g. by oxidation of 1,2-dihydroxyethylene groups (such as those at the 2,3-position of 1,4-linked or 1,6-linked glucans) using periodate-type oxidising agents, followed by partial further oxidation thereof to carboxyl groups using different oxidising agents such chlorite or bromine;

(5) introduction of (protected) aldehyde groups (e.g. furan acetals) by etherification, e.g. as described in US 4,731,162 and US 4,741,804, followed by introduction of carboxymethyl groups.

Further combinations of partial reaction steps as described above are also contemplated.

The individual reaction steps referred to above are known in the art. Carboxymethylation of polysaccharides is also widely used in the art, and is commonly performed using sodium monochloroacetate in alkaline medium or by hydroxyalkylation (e.g. with ethylene oxide) followed by catalytic oxidation. Other carboxyalkylation, such as carboxyethylation, can be accomplished by base-catalysed addition of acrylamide followed by hydrolysis, or by addition of succinic or maleic or other anhydride, etc. Sulphate and sulpho groups can be introduced by reaction with sulphuric acid derivatives such as chlorosulphonic acid or with vinylsulphonic acid or taurine analogues. Phosphorylation can be achieved by reaction with phosphoric acid or its derivatives or with haloalkyl-phosphonic acids.

Also, oxidation of 1,2-dihydroxyethylene groups in the recurring units of polysaccharides is extensively known, and can be performed with periodate or similar polyoxyanions, resulting in C-C bond scission according to the equation:

$$-CHOH-CHOH- \rightarrow -CH=O + O=CH-$$

and thus to opening of the cyclic anhydromonosaccharide unit. These products are usually referred to as "dialdehyde carbohydrates" such as dialdehyde starch (DAS) and dialdehyde inulin (DAI).

The partial further oxidation of these dialdehyde carbohydrates can be accomplished, e.g. with sodium chlorite with or without hydrogen peroxide, the molar amount of chlorite, with respect to the dialdehyde product, determining the carboxyl content of the final product.

A particularly advantageous method of further oxidising dialdehyde carbohydrates in a partial and controlled manner is described in PCT/NL99/00673 (WO00/26257, published 11 May 2000) and proceeds by reacting the dialdehyde product with a catalytic amount of halogen, such as chlorine, iodine and especially bromine. Halogen is regenerated in situ by oxidation with an oxidising agent. Sodium hypochlorite can be used for the (re)generation of the molecular halogen, but preference is given to peracids. The catalytic amount of molecular halogen may be 0.2-40, preferably from 1 to 10 mole%, with respect to the amount of peracid. The peracid may be any peralkanoic acid such as peracetic acid, perpropionic acid, perlauric acid etc., a substituted peralkanoic acid such as peroxytrifluoroacetic acid, an optionally substituted aromatic peracid such as perbenzoic acid or m-chloroperbenzoic acid, or an inorganic peracid such as perboric or persulphuric acid. The molar amount of oxidising agent (e.g. peracid) with respect to the dialdehyde product, determines the carboxyl content of the final product.

This method, besides reducing the amount of halide produced, is also beneficial to the properties of the partially oxidised products, in particular as to a more regular distribution of carboxyl and aldehyde groups. In addition, this method is cheaper than the oxidation with sodium chlorite in the presence of hydrogen peroxide and produces less halide waste.

The selective oxidation of hydroxymethyl groups (i.e. primary hydroxyl functions) to aldehyde and/or carboxyl functions has been known for several years. Nitric oxides, i.e. nitrogen dioxide and dinitrogen tetroxide or nitrite/nitrate are known in the art as suitable oxidising agents for these oxidations, as described e.g. in US Patent 3,364,200 and NL patent application 93.01172 and by Painter, Carbohydrate Research 55, 950193 (1977) and ibid. 140, 61-68 (1985).

This oxidation may be performed in an apolar, e.g. halogenated, solvent, or in an aqueous solvents, such as phosphoric acid.

A preferred reagent for the selective oxidation of hydroxymethyl groups is constituted by nitroxyl compounds, such as TEMPO (2,2,6,6-tetramethyl-piperidine-N-oxide) and related compounds such as 2,2,5,5-tetramethylpyrrolidine-N-oxyl, 2,2,5,5-tetramethylimidazoline-N-oxyl, and 4-hydroxy TEMPO and derivatives thereof such as the 4-phosphonooxy, 4-acetoxy, 4-benzoyloxy, 4-oxo, 4-amino, 4-acetamino, 4-maleimido, 4-isothiocyanato, 4-cyano and 4-carboxy TEMPO. TEMPO is used in these reactions as a catalyst (e.g. using 0.1-25 mol% with respect to final oxidising agent) in the presence of a final oxidising agent such as hypochlorite or hydrogen peroxide. TEMPO oxidation has been described e.g. in WO 95/07303. Further intermediate oxidants such as metal complexes (see PCT/NL00/00118), enzymes such as laccase or peroxidases (see WO 99/23240 and WO 99/23117 and PCT/NL00/00117) can be used. Examples of metal complexes are complexes of a transition metal such as manganese, iron, cobalt, nickel, copper, vanadium or ruthenium, with a complexing agent, especially nitrogen-containing compound such as a bipyridyl, a trimethyl-triazonane or other poly-tertiary amine or a (poly)histidine; such metal complexes can be used in an amount of 1-25 mol% with respect to the number a aldehyde or carboxyl groups desired. The actual oxidising species in the TEMPO-mediated oxidations is believed to be the nitrosonium ion. The A/C ratio can be controlled by selecting appropriate conditions: aldehyde formation is favoured at low temperatures (0-20 °C) and at relatively low pH (3-7) and by controlled addition and/or low levels of oxidising agent.

The anionic groups in the products thus obtained may be free carboxyl, sulpho or phosphono groups (acid form) or may be in the salt form, e.g. with sodium, potassium, ammonium or substituted ammonium as the counter cation. The aldehyde- and acid-containing products have at least 5 aldehyde groups, especially at least 10 aldehyde groups, and at least 1 anionic group, especially at least 3 carboxyl groups per molecule, also depending on the molecular weight (degree of polymerisation, DP). The degree of substitution (DS) for aldehyde groups is preferably between 5 and 98 % of the maximum value, more preferably between 25 and 75%. As the maximum number of aldehyde groups in most oxidised polysaccharides is 3 per recurring (monosaccharide) unit, the DS expressed in number of substituent groups per recurring unit is at least 0.10, preferably between 0.15 and 2.95, more preferably between 0.25 and 2.25). The DS for anionic groups. especially carboxylic groups, is preferably between 0.03 and 1.0, more preferably between 0.05 and 0.4 per recurring unit.

If desired for the purpose of enhancing wet strength, the multifunctional product can be further chemically modified. A particularly suitable derivative is a product also containing cationic groups. Such cationic groups can be introduced by reacting a part of the aldehyde groups with an amine, hydrazine, hydrazide or the like, optionally under reductive conditions, or by reacting, at some stage during the production, saccharidic hydroxyl groups with ammonium-containing reagents such as trimethylammonio-alkyl halides or epoxides. These multifunctional cationic compounds contain at least 0.01 up to about 0.50 cationic groups per recurring unit, preferably from 0.02 to 0.25 cationic groups per recurring unit; they are also part of the invention.

Alternatively, the aldehyde-anionic polymers can be combined with separate cationic compounds such as, for example, cationic polysaccharides, in particular cationic DAS, or with other conventional cationic wet strength agents such as PEI (polyethyleneimine) or PAE, to produce a composite wet-strength agent. Such composite wet strength agents are a distinct embodiment of the invention.

The aldehyde-containing anionic polymers can be combined, usually as aqueous solutions or dispersions with cellulosic fibres in a manner known for the application of wet strength agents. The amount of agent is preferably between 0.1 and 4 % by weight, especially between 0.2 and 2 % by weight, with respect to the cellulosic fibre. If desired, cationic wet strength agents can be applied subsequently followed by drying the fibre web. Addition of a cationic polymer is usually necessary for multifunctional derivatives that do not themselves contain cationic groups, because otherwise there would insufficient absorption of the derivative to the fibre. Further alternate layering with aldehyde-containing anionic polymer and cationic polymer can also be advantageous.

**Examples**

*Abbreviations:*

6-AS: 6-aldehyde starch
DAS: dialdehyde starch
MACC: monoaldehyde-carboxy cellulose
MACS: monoaldehyde-carboxy starch
PAE: polyamide-amide epichlorohydrin
PCD: particle charge determination

PEI: polyethyleneimine

**Example 1**

*a) Preparation of MACS with peracetic acid/bromide to different degrees of oxidation*

Dialdehyde starch (oxidation degree 100%) was prepared by adding 6.6 g sodium periodate (31 mmole) to a slurry of 5.0 g (dry weight) starch (31 mmole) in 100 ml water which was brought to pH 5 with diluted acetic acid and cooled down to 4°C. The mixture was stirred for 24 hours at 4°C in the absence of light. The obtained product was isolated by filtration and washed with water until iodate could no longer be detected by reaction with potassium iodide.
To obtain MACS, the dialdehyde starch was reslurried in 100 ml water and part of the aldehydes were further oxidised to carboxylates. To achieve this, sodium bromide (0.5 g) was added and then peracetic acid (0.6 M) was added portion-wise (see Table). The pH was kept constant at pH 5 using 0.5 M NaOH (pH-stat.). After reaction, the aldehyde carboxy starch was purified by membrane filtration (molecular cut-off 5000 MW) and freeze-dried.

| Sample | Totally added peracetic acid solution (ml of 0.6 M solution) | % aldehydes oxidised to carboxylates |
|--------|----------|----------|
| A50 | 52 | 50 |
| A30 | 31 | 30 |
| A10 | 10 | 10 |
| A5 | 5 | 5 |

*b) Application as wet strength additive*

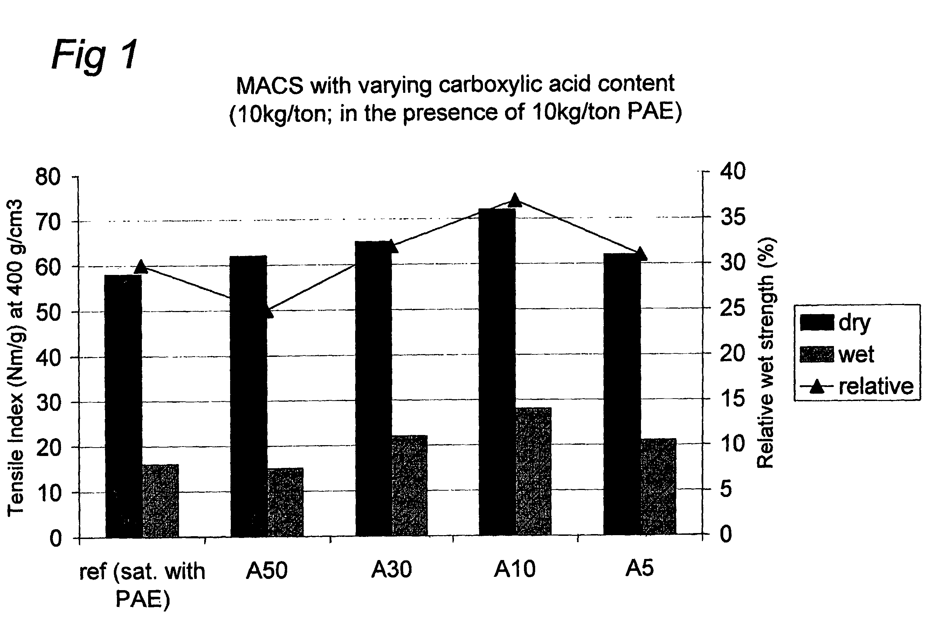

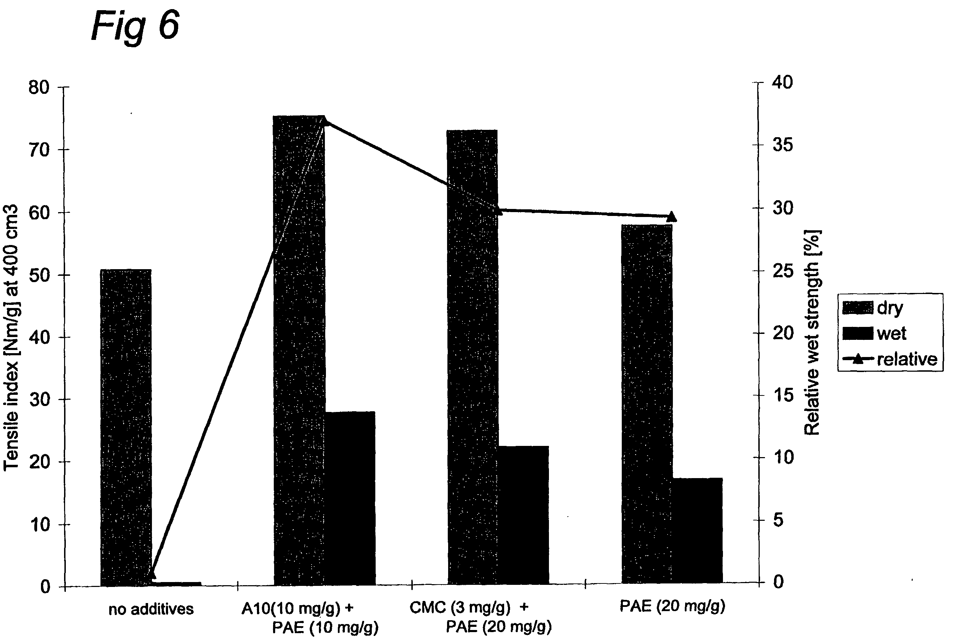

The addition levels were 10 mg/g MACS and 10 mg/g PAE.
Sheets were prepared as in example 8. The results are presented in Figure 1.
The highest relative wet strength was obtained in the sheets treated with MACS with an oxidation degree of 10% and PAE. The performance of this combination is better than the combination of CMC and PAE, which is commonly used nowadays. It may be noted that when no additives are used, essentially no wet strength is obtained (compare Figure 6).

**Example 2**

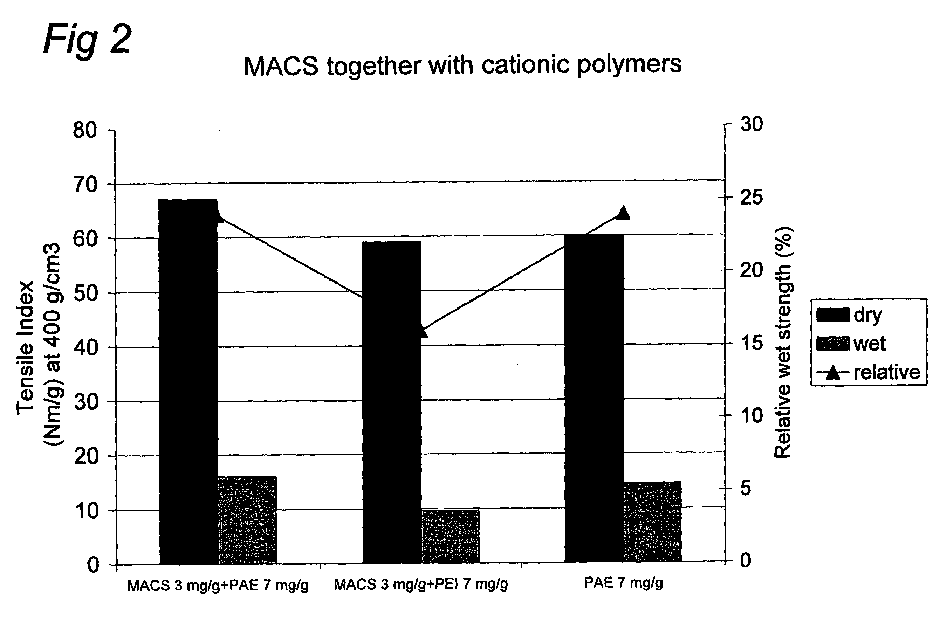

MACS with an oxidation degree of 50% was prepared as described in Example 1. This polymer was added to pulp together with PEI (3mg/g and 7mg/g, respectively).
Sheets were prepared as in example 8. The results are presented in Figure 2. It may be noted that PEI does not give wet strength by itself (like PAE does). The wet strength shown in the case of MACS + PEI can be completely ascribed to MACS.

**Example 3**

*a) Preparation of MACS with chlorite/hydrogen peroxide to different degrees of oxidation*

Dialdehyde starch (oxidation degree 100%) was prepared as described in example 1. To obtain MACS, 5 g of the dialdehyde starch (30 mmole AGU) was reslurried in 100 ml water and cooled to 4°C. In order to oxidise part of the aldehydes to carboxylates, hydrogen peroxide (640 µl of a 30 % solution, 6 mmole) and 700 mg sodium chlorite (80% grade, 7.5 mmole) were added. The pH was kept constant at pH 5 using 0.5 M NaOH (pH-stat.). After reaction, the aldehyde carboxy starch was purified by filtration and washing with water and the product was subsequently freeze-dried.

| Sample | Added hydrogen peroxide solution (30%) (µl) | Added sodium chlorite (80%) (mg) | % aldehydes oxidised to carboxylates |
|--------|----------|----------|----------|
| Ac5 | 320 | 350 | 5 |
| Ac10 | 640 | 700 | 10 |
| Ac15 | 960 | 1050 | 15 |

*b) Application as wet strength additive*

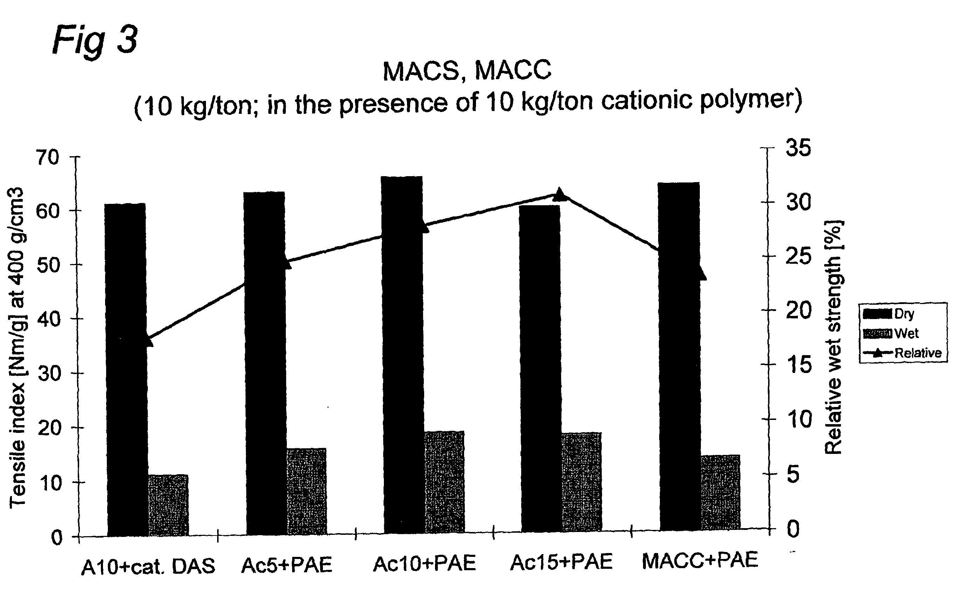

Sheets were prepared as in example 8.
The addition levels were 10 mg/g MACS and 10 mg/g PAE. The results are presented in Figure 3.

## Example 4

Dialdehyde cellulose (oxidation degree 100%) was prepared by adding 6.6 g sodium periodate (31 mmole) to a slurry of 5.0 g (dry weight) cellulose (31 mmole) in 100 ml water which was brought to pH 5 with diluted acetic acid and cooled down to 4°C. The mixture was stirred for 1 week at 4°C in the absence of light. The obtained product was isolated by filtration and washed with water until iodate could no longer be detected by reaction with potassium iodide.
To obtain MACC, the dialdehyde cellulose was reslurried in 100 ml water and half of the aldehydes were further oxidised to carboxylates. To achieve this, sodium bromide (0.5 g) was added and then peracetic acid (0.6 M) was added portion-wise (52 ml of a 0.6 M solution). The pH was kept constant at pH 5 using 0.5 M NaOH (pH-stat.). After reaction, the aldehyde carboxy cellulose was purified by membrane filtration (molecular cut-off 5000 MW) and freeze-dried.
Sheets were prepared as in example 8. The results are presented in Figure 3.

## Example 5

MACS with an oxidation degree of 10 % was prepared as described in example 1. This material was added to pulp (10 mg/g) together with cationic dialdehyde starch (10 mg/g). Sheets were prepared as in example 8. The results are presented in Figure 3.

## Example 6

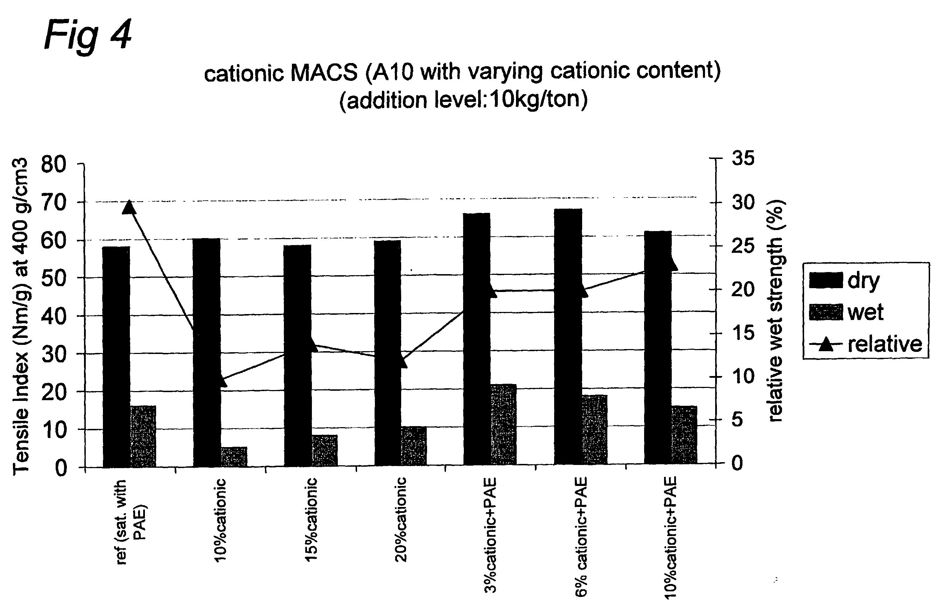

MACS with an oxidation degree of 10 % was prepared as described in example 1. 1 g of this material was suspended in water and Girard's reagent ($NH_2NHCOCH_2N^+(CH_3)_3$, betaine hydrazide, 100 mg for 10% cationisation) was added. The solution was stirred for 2 hours at 40°C and was subsequently freeze dried. A cationic MACS derivative was obtained. This sample was added to pulp (addition level 10 mg/g), and sheets were prepared as in example 8. The cationic MACS derivative adsorbs onto the fibres and gives wet strength. When added together with PAE (10 mg/g), the performance increased with lowering of the content of cationic groups (see Figure 4).

## Example 7

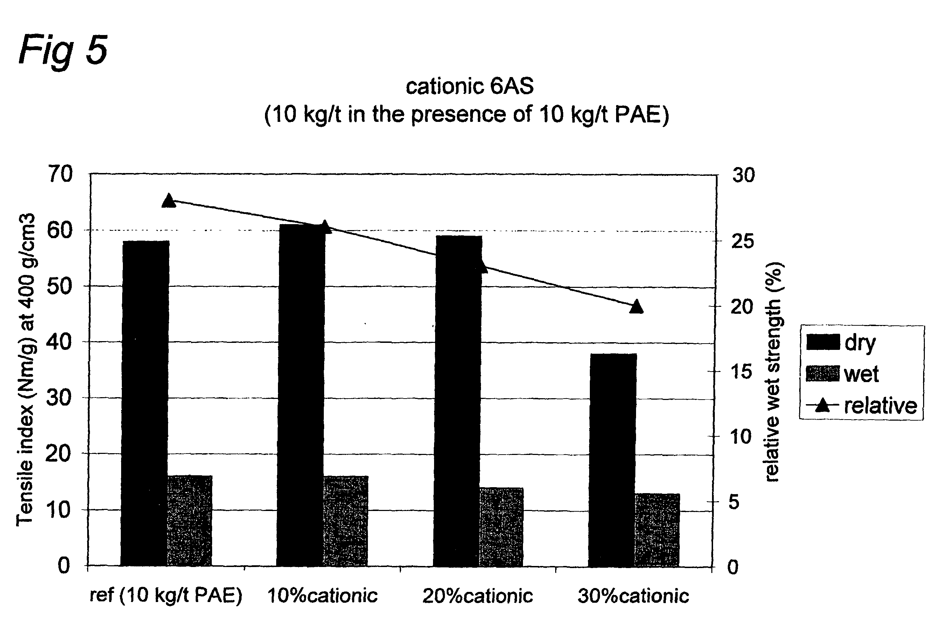

6-Aldehyde starch was prepared by a TEMPO-mediated oxidation of starch. 5.0 g (dry weight) starch (31 mmol) was gelatinised in 250 ml water. TEMPO (65 mg) and horseradish peroxidase (100 mg) were added. The pH of the solution was adjusted to 5.0 using diluted acetic acid. Hydrogen peroxide (3.75 ml of a 30 % solution, 33 mmole) was diluted to a volume of 125 ml and was added gradually at a rate of 5 ml/hour. The reaction time was 25 hours at room temperature. Adjustment of the pH during reaction was not necessary. The product was purified by membrane filtration (molecular cut-off 5000 MW) and freeze-dried.
1 g of this material was redissolved in water and Girard's reagent (100 mg for 10% cationisation) was added. The solution was stirred for 2 hours at 40°C and was subsequently freeze dried again. A cationic 6-aldehyde starch was obtained. This sample was added to pulp (addition level 10 mg/g) together with PAE (10 mg/g). Sheets were prepared as in example 8. The results are shown in Figure 5.

## Example 8

*Sheet making with derivatives of the invention*

*1. Refining*

500-530 grams of Östrand TCF pulp is diluted to 12 litres and refined to 25 SR° by a Laboratory refiner R1L, Escher Wyss. The pulp, when refined, is about 40 g/L so it is diluted to the concentration of 3 g/L.

*2. Dynamic sheet former, Formette*

A wire of 0,4 $m^2$ is used and we want the Grammage to be 30 $g/m^2$.

The pulp is poured into the beater and the wet strength additive is added during stirring for 5 minutes. If PAE is added, it is added after five minutes and the pulp is stirred again for two minutes. Drum speed 1400 rotations/min, dewatering 30 sec.

*3. Press*

An absorbent paper is put over the sheet and the wire is taken off. Before pressing another absorbent paper is put over the sheet, so the sheet is between the two absorbent papers. The sheet is pressed at 0,5 bar once. To be able to compare sheets with each other, two sheets of the same composition are made but pressed at two different pressures, 0,5 bar and 5 bar. In this way we can compare them at the same density 400 g/cm$^3$.

*4. Drying*

The sheet is cut into four pieces and dried two and two with a fixed point for three minutes at a temperature of 140 °C.

*5. Cutting*

The sheet is cut into 15-mm strips for testing of dry and wet strength. 100*100mm is also cut out for measuring the thickness and Grammage.

*6. Conditioning*

The strips which wet strength is going to be tested are placed in a heating chamber, 105° C for 10 minutes. Then both the strips for wet and dry strength are placed in a climate room, temperature 23°C, moisture 50% for four hours.

*7. Grammage and thickness*

100*100 mm pieces of the sheet is used for measuring the Grammage and thickness.
Grammage is measured on a regular balance on 4 layers to get an average.
Thickness is also measured on four layers and on five different spots to get a good average.

*8. Tensile strength measurement*

The strength both wet and dry is measured in an Instron SCAN-P58:86.
Five 15-mm strips are measured to get an average.
When measuring the wet strength the strip is soaked for 15 sec in tap water.

**Claims**

1.  Use of a water-soluble or water-dispersible polymer having a molecular weight of at least 800, containing at least 5 aldehyde groups per molecule and at least 1 anionic group per molecule, the ratio of aldehyde groups to anionic groups being higher than 0.75:1, as a wet strength additive.

2.  Use according to claim 1, in which the degree of substitution for aldehyde groups is 0.1-2.95 per recurring unit of the polymer, and the degree of substitution for anionic groups is 0.03-1.0 per recurring unit of the polymer.

3.  Use according to claim 1, in which the degree of substitution for aldehyde groups is 0.25-2.25 per recurring unit of the polymer, and the degree of substitution for anionic groups is 0.05-0.4 per recurring unit of the polymer.

4.  Use according to any one of claims 1-3, in which the anionic groups comprise carboxylic groups.

5.  Use according to any one of claims 1-4, in which the polymer is a polysaccharide.

6.  Use according to claim 5, in which the polymer is starch or cellulose or a starch- or cellulose-derived polymer.

7.  Use according to claim 5 or 6, in which the aldehyde groups and the anionic groups are present as a result of oxidation of dihydroxyethylene moieties of recurring monosaccharide units.

8.  Use according to claim 5 or 6, in which the aldehyde groups and the anionic groups are present as a result of oxidation of hydroxymethyl moieties of monosaccharide units.

9.  Use according to any one of the preceding claims, in which anionic groups are present as a result of carboxymethylation.

10. Use according to any one of the preceding claims, in which the polymer further contains cationic groups with a degree of substitution of 0.01-0.50.

11. Carbohydrate derivative containing 0.10-2.95 aldehyde groups, and 0.03-1.0 anionic groups and 0.01-0.50 cationic groups per recurring unit.

12. A wet strength composition containing 10-90% of a carbohydrate derivative containing 0.10-2.95 aldehyde groups, and 0.03-1.0 anionic groups per recurring unit, and 90-10% of a cationic polymer, the percentages being based on the total of carbohydrate derivative and cationic polymer.

13. A cellulosic fibre treated with a polymer as defined in any one of claims 1-11, or with a mixture according to claim 12.

## Fig 1

MACS with varying carboxylic acid content
(10kg/ton; in the presence of 10kg/ton PAE)

EP 1 154 074 A1

Fig 2

MACS together with cationic polymers

EP 1 154 074 A1

# Fig 3

**MACS, MACC**
**(10 kg/ton; in the presence of 10 kg/ton cationic polymer)**

EP 1 154 074 A1

Fig 4

cationic MACS (A10 with varying cationic content)
(addition level:10kg/ton)

Fig 5

Fig 6

EP 1 154 074 A1

EP 1 154 074 A1

<table>
<tr><td colspan="5" align="center">**DOCUMENTS CONSIDERED TO BE RELEVANT**</td></tr>
<tr><td>Category</td><td colspan="2">Citation of document with indication, where appropriate, of relevant passages</td><td>Relevant to claim</td><td>CLASSIFICATION OF THE APPLICATION (Int.Cl.7)</td></tr>
<tr><td>X</td><td colspan="2">WO 00 11046 A (HERCULES INC)<br>2 March 2000 (2000-03-02)<br>* claims 1,6,14,25,59; examples *<br>----</td><td>1,4,10, 13</td><td>D21H21/20<br>C08B15/00<br>C08B31/00<br>//D21H17:25,<br>D21H17:28</td></tr>
<tr><td>A</td><td colspan="2">US 4 675 394 A (JOBE PATRICK G ET AL)<br>23 June 1987 (1987-06-23)<br>* the whole document *<br>----</td><td>1,5,6, 11-13</td><td></td></tr>
<tr><td>A</td><td colspan="2">EP 0 283 951 A (NAT STARCH CHEM CORP)<br>28 September 1988 (1988-09-28)<br>* page 4, line 47 - page 5, line 24; claims 1,2,5,15,16 *<br>----</td><td>1,5,6, 11-13</td><td></td></tr>
<tr><td>A</td><td colspan="2">EP 0 232 851 A (NAT STARCH CHEM CORP)<br>19 August 1987 (1987-08-19)<br>* page 4, line 5 - page 7, line 15; claims 1,2,5-8 *<br>----</td><td>1,5,6, 11-13</td><td></td></tr>
<tr><td>A</td><td colspan="2">US 5 958 187 A (MARINACK ROBERT J ET AL)<br>28 September 1999 (1999-09-28)<br>* column 5, line 32 - column 7, line 50 *<br>----</td><td>11-13</td><td>TECHNICAL FIELDS SEARCHED (Int.Cl.7)<br><br>D21H<br>C08B</td></tr>
<tr><td colspan="4">The present search report has been drawn up for all claims</td><td></td></tr>
<tr><td colspan="2">Place of search<br>THE HAGUE</td><td>Date of completion of the search<br>2 October 2000</td><td colspan="2">Examiner<br>Songy, O</td></tr>
<tr><td colspan="2">CATEGORY OF CITED DOCUMENTS<br><br>X : particularly relevant if taken alone<br>Y : particularly relevant if combined with another document of the same category<br>A : technological background<br>O : non-written disclosure<br>P : intermediate document</td><td colspan="3">T : theory or principle underlying the invention<br>E : earlier patent document, but published on, or after the filing date<br>D : document cited in the application<br>L : document cited for other reasons<br>.....................................................................................<br>& : member of the same patent family, corresponding document</td></tr>
</table>

European Patent Office

**EUROPEAN SEARCH REPORT**

Application Number

EP 00 20 1693

EPO FORM 1503 03.82 (P04C01)

15

**ANNEX TO THE EUROPEAN SEARCH REPORT
ON EUROPEAN PATENT APPLICATION NO.**                EP 00 20 1693

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2000

| Patent document cited in search report | | Publication date | Patent family member(s) | | Publication date |
|---|---|---|---|---|---|
| WO 0011046 | A | 02-03-2000 | AU | 5489999 A | 14-03-2000 |
| US 4675394 | A | 23-06-1987 | AT | 37884 T | 15-10-1988 |
| | | | AU | 558885 B | 12-02-1987 |
| | | | AU | 4615585 A | 20-02-1986 |
| | | | BR | 8503957 A | 03-06-1986 |
| | | | DE | 3565543 D | 17-11-1988 |
| | | | EP | 0175113 A | 26-03-1986 |
| | | | ES | 546195 D | 16-01-1986 |
| | | | ES | 8604267 A | 01-06-1986 |
| | | | FI | 853152 A,B, | 18-02-1986 |
| | | | JP | 1920543 C | 07-04-1995 |
| | | | JP | 6049722 B | 29-06-1994 |
| | | | JP | 61112091 A | 30-05-1986 |
| | | | US | 4983748 A | 08-01-1991 |
| | | | US | 4703116 A | 27-10-1987 |
| | | | CA | 1237124 A | 24-05-1988 |
| | | | US | 4731162 A | 15-03-1988 |
| | | | US | 4741804 A | 03-05-1988 |
| | | | ZA | 8506141 A | 28-05-1986 |
| EP 0283951 | A | 28-09-1988 | US | 4788280 A | 29-11-1988 |
| | | | CA | 1305961 A | 04-08-1992 |
| | | | DE | 3883818 D | 14-10-1993 |
| | | | DE | 3883818 T | 10-03-1994 |
| | | | JP | 1242601 A | 27-09-1989 |
| | | | JP | 1902670 C | 08-02-1995 |
| | | | JP | 6025201 B | 06-04-1994 |
| EP 0232851 | A | 19-08-1987 | US | 4703116 A | 27-10-1987 |
| | | | AT | 65783 T | 15-08-1991 |
| | | | AU | 594744 B | 15-03-1990 |
| | | | AU | 6882687 A | 20-08-1987 |
| | | | DE | 3771739 A | 05-09-1991 |
| | | | FI | 870631 A,B, | 15-08-1987 |
| | | | JP | 1628834 C | 20-12-1991 |
| | | | JP | 2055441 B | 27-11-1990 |
| | | | JP | 62246902 A | 28-10-1987 |
| | | | US | 4741804 A | 03-05-1988 |
| | | | US | 4804769 A | 14-02-1989 |
| US 5958187 | A | 28-09-1999 | EP | 0672787 A | 20-09-1995 |
| | | | FI | 951275 A | 19-09-1995 |
| | | | CA | 2144838 A | 19-09-1995 |

EPO FORM P0459

For more details about this annex : see Official Journal of the European Patent Office, No. 12/82